# EUROPÄISCHE PATENTSCHRIFT

(11) **EP 3 267 558 B1**
(45) Veröffentlichungstag und Bekanntmachung des Hinweises auf die Patenterteilung: **28.04.2021**
(21) Anmeldenummer: 17178582.7
(22) Anmeldetag: 29.06.2017
(51) Int. Cl.: H02J 9/06, H05B 45/50, H05B 47/105

(54) **BATTERIETYPERKENNUNG BEI NOTLICHTBETRIEBSGERÄTEN**
BATTERY TYPE DETECTION IN EMERGENCY LIGHTING DEVICES
DÉTECTION DU TYPE DE BATTERIE POUR DES APPAREILS D'ÉCLAIRAGE DE SECOURS

(30) Priorität: 06.07.2016 DE 102016212298
(43) Veröffentlichungstag der Anmeldung: 10.01.2018
(73) Patentinhaber: Tridonic GmbH & Co. KG, 6851 Dornbirn (AT)
(72) Erfinder: Ladurner, Simon, 6922 Wolfurt (AT)
(74) Vertreter: Rupp, Christian

(56) Entgegenhaltungen:
- EP-A1- 0 611 106
- EP-A1- 1 202 429
- WO-A2-2010/127366
- GB-A- 2 285 317
- US-A1- 2011 309 839
- US-A1- 2013 127 362
- US-A1- 2013 342 131

## Beschreibung

### 1. Gebiet der Erfindung

Die vorliegende Erfindung betrifft ein erfindungsgemäßes Notlichtbetriebsgerät zum Betreiben einer Leuchtmittelstrecke mit wenigstens einem Leuchtmittel, vorzugsweise einer Leuchtdiodenstrecke mit wenigstens einer Leuchtdiode, das dazu eingerichtet ist, wenigstens einen elektrischen Parameter einer an das erfindungsgemäße Notlichtbetriebsgerät elektrisch angeschlossenen Batterie zu erfassen und auf Basis des wenigstens einen elektrischen Parameters der Batterie den Batterietyp der Batterie zu bestimmen. Ferner betrifft die vorliegende Erfindung ein erfindungsgemäßes Beleuchtungsgerät umfassend ein erfindungsgemäße Notlichtbetriebsgerät und eine Leuchtmittelstrecke sowie ein erfindungsgemäßes Verfahren zum Betreiben eines erfindungsgemäßen Notlichtbetriebsgerätes.

### 2. Hintergrund

Aus dem Stand der Technik sind Notlichtbetriebsgeräte bekannt, die während einem Notlichtbetrieb eine Leuchtmittelstrecke mit wenigstens einem Leuchtmittel ausgehend von einer Batterie mit elektrischer Energie versorgen, damit durch die Lichtemission der Leuchtmittelstrecke eine Notlichtbeleuchtung bereitstellt wird. Üblicherweise wird ein Notlichtbetrieb aufgrund eines Ausfalls der regulären Netzspannungsversorgung ausgelöst.

Üblicherweise umfasst ein Notlichtbetriebsgerät eine Ladeschaltung, die während einem Normalbetrieb die Batterie ausgehend von der regulären Energieversorgung mit elektrischer Energie lädt. Unter einem Normalbetrieb wird der Betrieb außerhalb des Notlichtbetriebs verstanden, in dem eine elektrische Versorgung der Leuchtmittelstrecke ausgehend von der regulären Energieversorgung erfolgt.

Es gibt mittlerweile eine Vielzahl von unterschiedlichen Batterietypen. Üblicherweise ist gemäß dem Stand der Technik ein Notlichtbetriebsgerät für einen bestimmten Batterietyp eingerichtet, sodass der Ladebetrieb durch die Ladeschaltung des Notlichtbetriebsgerätes auf diesen einen bestimmten Batterietyp ausgerichtet ist.

Für den Fall, dass also eine Batterie eines "falschen" Batterietyps in einem Notlichtbetriebsgerät verwendet wird, für den dieses nicht vorgesehen ist, kann es aufgrund des für den "falschen" Batterietyp nicht geeigneten Ladeverfahrens zu höheren Temperaturen während dem Ladevorgang der Batterie kommen. Die höhere Temperatur ist nachteilig, da dadurch die Lebensdauer der Batterie verkürzt wird.

Um diesen Nachteil zu umgehen wird nun gemäß dem Stand der Technik entweder ein Notlichtbetriebsgerät mit verschiedenen Ladeschaltungen für die unterschiedlichen Batterietypen versehen, was das Produktportfolio unnötig erweitert, oder ein Benutzer passt manuell den Ladealgorithmus der Ladeschaltung des Notlichtbetriebsgerätes abhängig von dem Batterietyp der im Notlichtbetriebsgerät verwendeten Batterie an, was bei einer Fehlbedienung zu einer höheren Temperatur während des Ladens oder gar zu einem Sicherheitsrisiko führen kann. Aufgrund der höheren Temperatur kann die Lebensdauer der Batterie wieder verkürzt werden und für den Fall, dass aufgrund eines falsch eingestellten Ladealgorithmus die Batterie nicht geladen ist, kann es dazu kommen, dass während dem Notlichtbetrieb keine elektrische Energie ausgehend von der Batterie bereitgestellt werden kann.

Das Dokument US 2013/0127362 A1 zeigt ein Notlichtsystem für die Bereitstellung von Notlicht mittels LEDs.

Das Dokument US 2011/0309839 A1 zeigt ein Gerät zur Bestimmung eines Batterietyps.

Das Dokument EP 0 611 106 A1 zeigt ein Gerät und ein Verfahren zur Unterscheidung verschiedener Batterietypen.

Das Dokument EP 1 202 429 A1 zeigt ein Notlichtgerät, welches mit verschiedenen Batterietypen nutzbar ist.

Im Lichte dieses Standes der Technik ist es daher die Aufgabe der vorliegenden Erfindung ein Notlichtbetriebsgerät bereitzustellen, das die vorstehend beschriebenen Nachteile des Stands der Technik ausräumen kann.

Diese und andere Aufgaben, die beim Lesen der folgenden Beschreibung noch genannt werden oder vom Fachmann erkannt werden können, werden durch den Gegenstand der unabhängigen Ansprüche gelöst. Weitere vorteilhafte Ausgestaltungen sind Gegenstand der abhängigen Ansprüche.

Ausführungen, welche im Folgenden dargestellt werden, welche nicht unter den Wortlaut des unabhängigen Anspruchs fallen, sind nicht als Ausführungsbeispiele der Erfindung zu verstehen, sondern als für das Verständnis der Erfindung hilfreiche Beispiele.

### 3. Ausführliche Beschreibung der Erfindung

Gemäß der vorliegenden Erfindung wird ein Notlichtbetriebsgerät zum Betreiben einer Leuchtmittelstrecke mit wenigstens einem Leuchtmittel, vorzugsweise einer Leuchtdiodenstrecke mit wenigstens einer Leuchtdiode, bereitgestellt, wobei das Notlichtbetriebsgerät einen Versorgungspfad zum Bereitstellen einer elektrischen Energie für die Leuchtmittelstrecke, einen Batterieanschluss zum elektrischen Anschließen einer Batterie an den

Versorgungspfad des Notlichtbetriebsgerätes, und einer Steuereinheit umfasst. Die Steuereinheit ist dazu eingerichtet, wenigstens einen elektrischen Parameter der Batterie zu erfassen und auf Basis des wenigstens einen elektrischen Parameters der Batterie den Batterietyp der Batterie vorzugsweise automatisch zu bestimmen, wenn die Batterie durch den Batterieanschluss an den Versorgungspfad des Notlichtbetriebsgerätes elektrisch angeschlossen ist.

Mit anderen Worten ist das Notlichtbetriebsgerät dazu eingerichtet, den Batterietyp der Batterie, ausgehend von der das Notlichtbetriebsgerät die Leuchtmittelstrecke mit elektrischer Energie während des Notlichtbetriebs versorgt, auf Basis wenigstens eines elektrischen Parameters der Batterie zu ermitteln.

Dies ist vorteilhaft, da auf Basis des bestimmten bzw. ermittelten Batterietyps die Batterie mit dem für den Batterietyp geeigneten Ladebetrieb geladen werden kann.

Unter einem *"Notlichtbetriebsgerät"* wird ein Betriebsgerät verstanden, dass dazu geeignet ist, eine Leuchtmittelstrecke aufweisend wenigstens ein Leuchtmittel mit elektrischer Energie bzw. mit einem Strom während einem Notlichtbetrieb bzw. Notfallbetrieb zu versorgen, sodass die Leuchtmittelstrecke Licht für eine Notlichtbeleuchtung abhängig von der zugeführten elektrischen Energie bzw. dem zugeführten Strom emittiert.

Unter einem *"Notlichtbetrieb"* wird eine Betriebsart verstanden, in der das Notlichtbetriebsgerät die Leuchtmittelstrecke mit elektrischer Energie nicht ausgehend von der regulären vorzugsweise zentralen Energieversorgung z.B. ausgehend von einem Versorgungsbus und/oder dem Stromnetz mit Netzspannung, sondern ausgehend von einer vorzugsweise wiederaufladbaren Batterie versorgt. Die Batterie als Notlichtenergiequelle stellt hierbei eine autonome Energieversorgungseinrichtung bzw. Energiespeichereinrichtung dar. Im Gegensatz dazu versorgt das Notlichtbetriebsgerät die Leuchtmittelstrecke in einem Normalbetrieb vorzugsweise ausgehend von der regulären Energieversorgung, z.B. mit Netzspannung.

Vorzugsweise kann der Notlichtbetrieb einer Betriebsart aufgrund eines Ereignisses bzw. Notfalles entsprechen, wodurch die reguläre Versorgung mit elektrischer Energie, z.B. ausgehend von einem Versorgungsbus und/oder dem Stromnetz mit Netzspannung, gestört bzw. unterbrochen ist. Zum Beispiel kann ein solches Ereignis ein Brand in einem Gebäude sein, bei dem durch das Feuer das reguläre elektrische Energieversorgungssystem des Gebäudes zum Bereitstellen von elektrischer Energie, insbesondere zum Betreiben der Leuchtmittelstrecke, gestört bzw. unterbrochen ist. Ein solches Ereignis kann aber auch einem Stromausfall (Ausfall der regulären elektrischen Energieversorgung) in dem Gebäude entsprechen, der auf andere Weise verursacht wurde, zum Beispiel ein Stromausfall aufgrund eines Versorgungsausfalls seitens des Energieerzeugers (Stadtwerke).

Vorzugsweise wird ein Notlichtbetrieb durch eine Verringerung der regulären Versorgungsspannung, vorzugsweise der Netzspannung, ausgelöst. Vorzugsweise erfasst bzw. überwacht das Notlichtbetriebsgerät, insbesondere die Steuereinheit des Notlichtbetriebsgerätes, die reguläre Versorgungsspannung und startet bzw. löst einen Notlichtbetrieb aus, wenn eine Absenkung bzw. Verringerung der regulären elektrischen Versorgung erfasst bzw. ermittelt wird.

Das Notlichtbetriebsgerät kann vorzugsweise ein normales Betriebsgerät zum Betreiben einer Leuchtmittelstrecke darstellen, das dazu eingerichtet ist, im Normalbetrieb, d.h. außerhalb des Notlichtbetriebs, die Leuchtmittelstrecke ausgehend von der regulären Energieversorgung mit elektrischer Energie zu versorgen und im Notlichtbetrieb die Leuchtmittelstrecke ausgehend von einer Batterie als Notlichtenergiequelle mit elektrischer Energie zu versorgen.

Das Notlichtbetriebsgerät kann alternativ auch nur dazu eingerichtet sein, die Leuchtmittelstrecke während eines Notlichtbetriebs mit elektrischer Energie ausgehend von einer Batterie zu versorgen. Im Normalbetrieb wird die Leuchtmittelstrecke, wenn diese nicht nur für eine Lichtemission während eines Notlichtbetriebs vorgesehen ist, dann vorzugsweise durch ein weiteres Betriebsgerät ausgehend von der regulären Energieversorgung mit elektrischer Energie versorgt.

Das Notlichtbetriebsgerät ist vorzugsweise dazu eingerichtet, die Batterie, die als Notlichtenergiequelle im Notlichtbetrieb dient, im Normalbetrieb zu laden.

Vorzugsweise umfasst die Leuchte als Leuchtmittel (Lichtquelle) eine oder mehrere Leuchtdioden. Der Begriff *"Leuchtdiode (LED)"* umfasst Leuchtdioden mit Primäranregung, Leuchtdioden mit Sekundäranregung, anorganische Leuchtdioden, organische Leuchtdioden (OLEDs) sowie alle weiteren bekannten Arten von Leuchtdioden. Die Leuchte kann aber zusätzlich oder alternativ auch andere bekannte Leuchtmittel, wie z.B. Leuchtstoffröhren oder Gasentladungslampen usw., umfassen, die dazu eingerichtet sind, Licht zu emittieren.

Der Versorgungspfad umfasst vorzugsweise wenigstens eine Konverterstufe, welche vorzugsweise wenigstens einen aktiv getakteten DC/DC-Wandler bzw. Gleichspannungswandler aufweist, um ausgehend von der Batterie die elektrische Energie für den Notlichtbetrieb des wenigstens einen Leuchtmittels der Leuchtmittelstrecke bereitzustellen. Wenn das Notlichtbetriebsgerät auch zum Betrieb der Leuchtmittelstrecke im Normalbetrieb eingerichtet ist, wird vorzugsweise die elektrische Energie auch im Normalbetrieb über den Versorgungspfad (ausgehend von der regulären Energieversorgung) der Leuchtmittelstrecke zugeführt. Alternativ kann das Notlichtbetriebsgerät einen zweiten Versorgungspfad für den Normalbetrieb aufweisen.

Unter einer *"Batterie"* wird eine autonome Energiespeichereinrichtung bzw. Energieversorgungseinrichtung verstanden, die dazu eingerichtet ist, elektrische Energie zu speichern. Die Batterie ist vorzugsweise ladbar und kann folglich auch als Akkumulator bzw. Akku bezeichnet werden.

Die Steuereinheit des Notlichtbetriebsgerätes ist vorzugsweise ein Mikrokontroller, ein ASIC (anwendungsspezifische integrierte Schaltung) oder ein Hybrid daraus, welche vorzugsweise zur Steuerung des Notlichtbetriebsgerätes, insbesondere zur Steuerung des Versorgungspfades, eingerichtet ist, um die während des Notlichtbetriebs der Leuchtmittelstrecke zugeführte elektrische Energie zu steuern und folglich den Betrieb der Leuchtmittelstrecke während des Notlichtbetriebs zu steuern. Vorzugsweise ist die Steuereinheit auch dazu eingerichtet, die während des Normalbetriebs der Leuchtmittelstrecke zugeführte elektrische Energie zu steuern.

Ein elektrischer Parameter einer Batterie kann zum Beispiel die Leerlaufspannung der Batterie bzw. die Batteriespannung, der Innenwiderstand der Batterie, die Ladungsdichte der Batterie, der Ladungszustand der Batterie , die Ladekapazität der Batterie usw. sein.

Vorzugsweise ist die Steuereinheit dazu eingerichtet, den Batterietyp zu bestimmen, sobald die Batterie durch den Batterieanschluss an den Versorgungspfad des Notlichtbetriebsgerätes elektrisch angeschlossen ist.

Mit andere Worten ist die Steuereinheit vorzugsweise dazu eingerichtet, den Batterietyp der Batterie sofort bzw. automatisch zu bestimmen bzw. zu ermitteln, nachdem die Batterie durch den Batterieanschluss an den Versorgungspfad des Notlichtbetriebsgerätes angeschlossen wurde.

Vorzugsweise umfasst das Notlichtbetriebsgerät eine Erfassungseinrichtung zum Erfassen, ob eine Batterie an dem Batterieanschluss elektrisch angeschlossen ist. Vorzugsweise ermittelt bzw. bestimmt die Steuereinheit den Batterietyp einer Batterie, wenn durch die Erfassungseinrichtung erfasst wird, dass die Batterie an den Batterieanschluss elektrisch angeschlossen ist.

Ferner ist die Steuereinheit zum Bestimmen des Batterietyps der Batterie vorzugsweise dazu eingerichtet, einen ersten elektrischen Parameter der Batterie zu erfassen und auf Basis des ersten elektrischen Parameters die Basistechnologie der Batterie zu bestimmen.

Als Basistechnologien für Batterien sind auf Blei basierte Batterien (Blei-Basistechnologie), auf Nickel basierte Batterien (Nickel-Basistechnologie), auf Lithium basierte Batterien (Lithium-Basistechnologie), usw. bekannt. D.h. auf Blei basierte Batterien, auf Nickel basierte Batterien oder auf Lithium basierte Batterien stellen jeweils eine Basistechnologie für Batterien dar.

Des Weiteren ist die Steuereinheit vorzugsweise dazu eingerichtet, als ersten elektrischen Parameter die Leerlaufspannung der Batterie zu erfassen und auf Basis der Leerlaufspannung die Basistechnologie der Batterie zu bestimmen.

Die Leerlaufspannung einer Batterie wird auch als Batteriespannung oder Zellenspannung bezeichnet.

Mit anderen Worten kann die Steuereinheit auf Basis der Leerlaufspannung der Batterie die Basistechnologie der Batterie bestimmen.

Vorzugsweise umfasst die Steuereinheit eine Lookup-Tabelle, in der die Spannungswerte oder Spannungswertbereiche der Leerlaufspannung einer Batterie für die einzelnen Batterie-Basistechnologien hinterlegt sind. So kann dann auf Basis der erfassten Leerlaufspannung der Batterie die entsprechende Basistechnologie der Batterie bestimmt werden.

Vorzugsweise ist die Steuereinheit dazu eingerichtet, auf Basis der Leerlaufspannung der Batterie zu bestimmen, ob die Basistechnologie der Batterie einer ersten Basistechnologie oder einer zweiten Basistechnologie entspricht.

Mit anderen Worten kann die Steuereinheit auf Basis der Leerlaufspannung der Batterie zwei Basistechnologien voneinander unterscheiden.

Gemäß einer bevorzugten Ausführungsform ist die Steuereinheit vorzugsweise dazu eingerichtet, zu bestimmen, dass die Basistechnologie der Batterie der ersten Basistechnologie entspricht, wenn die Leerlaufspannung der Batterie kleiner als ein vorbestimmter Spannungsschwellenwert ist, und zu bestimmen, dass die Basistechnologie der Batterie der zweiten Basistechnologie entspricht, wenn die Leerlaufspannung der Batterie größer als der vorbestimmte Spannungsschwellenwert ist.

Gemäß einer weiteren bevorzugten Ausführungsform ist die Steuereinheit vorzugsweise dazu eingerichtet, zu bestimmen, dass die Basistechnologie der Batterie der ersten Basistechnologie entspricht, wenn die Leerlaufspannung der Batterie kleiner oder gleich wie ein erster vorbestimmter Spannungsschwellenwert ist, und zu bestimmen, dass die Basistechnologie der Batterie der zweiten Basistechnologie entspricht, wenn die Leerlaufspannung der Batterie größer oder gleich wie ein zweiter vorbestimmter Spannungsschwellenwert ist, wobei der zweite vorbestimmte Spannungsschwellenwert größer als der erste vorbestimmte Spannungsschwellenwert ist.

Vorzugsweise entspricht hierbei der erste vorbestimmte Spannungsschwellenwert einem Spannungswert von 1,2 V pro Zelle und der zweite vorbestimmte Spannungsschwellenwert entspricht einem Spannungswert von 3 V pro Zelle.

Ferner stellt vorzugsweise die erste Basistechnologie eine auf Nickel basierte Batterie (Nickel-Basistechnologie) dar und die zweite Basistechnologie stellt vorzugsweise eine auf Lithium basierte Batterie (Lithium-Basistechnologie) dar. Mit anderen Worten ist die Steuereinheit vorzugsweise dazu eingerichtet, zu bestimmen, dass die Basistechnologie der Batterie eine auf Nickel basierte Batterie darstellt, wenn die Leerlaufspannung der Batterie kleiner oder gleich wie ein Spannungswert von 1,2 V ist, und zu bestimmen, dass die Basistechnologie der Batterie eine auf Lithium basierte Batterie darstellt, wenn die Leerlaufspannung der Batterie größer oder gleich wie ein Spannungswert von 3 V ist.

Des Weiteren ist die Steuereinheit zum Bestimmen des Batterietyps der Batterie vorzugsweise dazu eingerichtet, einen zweiten elektrischen Parameter zu erfassen und auf Basis des zweiten elektrischen Parameters den Batterietyp der Basistechnologie der Batterie zu bestimmen.

Zum Beispiel sind Lithium-Cobaltdioxid-Batterien, Lithium-Polymer-Batterien, Lithium-Mangan-Batterien, Lithium-Eisenphosphat-Batterie, usw. Batterietypen von auf Lithium basierten Batterien, d.h. Lithium-Batterietypen, und Nickel-Cadmium-Batterien, Nickel-Eisen-Batterien, Nickel-Wasserstoff-Batterien, Nickel-Metallhydrid-Batterien, Nickel-Zink-Batterien, usw. sind Batterietypen von auf Nickel basierten Batterien, d.h. Nickel-Batterietypen. Vorzugsweise ist die Steuereinheit dazu eingerichtet, als zweiten elektrischen Parameter den Innenwiderstand der Batterie zu erfassen und auf Basis des Innenwiderstands den Batterietyp der Basistechnologie der Batterie zu bestimmen.

Vorzugsweise umfasst die Steuereinheit eine Lookup-Tabelle, in der für jede Basistechnologie die Widerstandswerte oder Widerstandswertbereiche des Innenwiderstands einer Batterie für die einzelnen Batterietypen hinterlegt sind. So kann dann auf Basis des erfassten Innenwiderstands der Batterie der entsprechende Batterietyp der Batterie bestimmt werden.

Ferner ist die Steuereinheit vorzugsweise dazu eingerichtet, auf Basis des Innenwiderstands der Batterie zu bestimmen, ob der Batterietyp der Basistechnologie der Batterie einem ersten Batterietyp oder einem zweiten Batterietyp entspricht.

Des Weiteren ist die Steuereinheit vorzugsweise dazu eingerichtet, zu bestimmen, dass der Batterietyp der Basistechnologie der Batterie dem ersten Batterietyp entspricht, wenn der erfasste Innenwiderstand kleiner als ein vorbestimmter Widerstandsschwellenwert ist, und zu bestimmen, dass der Batterietyp der Batterie dem zweiten Batterietyp entspricht, wenn der erfasste Innenwiderstand größer als der vorbestimmte Widerstandsschwellenwert ist.

Vorzugsweise, wenn die Basistechnologie der Batterie eine auf Nickel basierte Batterie darstellt, stellt der erste Batterietyp eine Nickel-Cadmium-Batterie dar und der zweite Batterietyp eine Nickel-Metallhydrid-Batterie dar.

Mit anderen Worten, wenn die Basistechnologie eine auf Nickel basierte Batterie darstellt, dann ist die Steuereinheit vorzugsweise dazu eingerichtet, zu bestimmen, dass der Batterietyp der Batterie einer Nickel-Metallhydrid-Batterie entspricht, wenn der Innenwiderstand der Batterie einem kleinen Widerstand entspricht, und zu bestimmen, dass der Batterietyp der Batterie einer Nickel-Cadmium-Batterie entspricht, wenn der Innenwiderstand der Batterie einem sehr kleinen Widerstand entspricht.

Der Innenwiderstandswerte der Batterien liegt typischerweise in einem Bereich von wenigen Ohm bis 100 Ohm.

Ferner weist das Notlichtbetriebsgerät vorzugsweise eine Ladeschaltung auf, die dazu eingerichtet ist, die Batterie zu laden, wenn die Batterie durch den Batterieanschluss an den Versorgungspfad des Notlichtbetriebsgerätes angeschlossen ist, wobei die Steuereinheit vorzugsweise dazu eingerichtet ist, die Ladeschaltung zum Laden der Batterie auf Basis des Batterietyps der Batterie zu steuern.

Mit anderen Worten ist die Ladeschaltung des Notlichtbetriebsgerätes dazu eingerichtet, eine Batterie zu laden, die an dem Batterieanschluss des Notlichtbetriebsgeräts angeschlossen ist.

Vorzugsweise ist die Ladeschaltung dazu eingerichtet, die Batterie im Normalbetrieb ausgehend von der regulären Energieversorgung zu laden.

Des Weiteren ist die Steuereinheit vorzugsweise dazu eingerichtet, auf Basis des Batterietyps der Batterie die Betriebsart der Ladeschaltung zum Laden der Batterie zu bestimmen.

Vorzugsweise ist die Steuereinheit dazu eingerichtet, die Ladeschaltung zum Laden der Batterie derart zu steuern, dass die Ladeschaltung die Batterie mit einem konstanten Strom lädt, wenn die durch die Steuereinheit bestimmte Basistechnologie der Batterie eine auf Nickel basierte Batterie darstellt, und die Ladeschaltung die Batterie zuerst mit einem konstanten Strom bis zu einem vorbestimmten Ladezustand der Batterie und nach Erreichen des vorbestimmten Ladezustands die Batterie mit einer konstanten Spannung lädt, wenn die durch die Steuereinheit bestimmte Basistechnologie der Batterie eine auf Lithium basierte Batterie darstellt.

Das Ladeverfahren mit einem konstanten Strom wird auch als Konstantstromladeverfahren bezeichnet. Das Ladeverfahren zuerst mit einem konstanten Strom und dann mit einer konstanten Spannung wird auch als Konstantstrom/Konstantspannungsladeverfahren bezeichnet.

Der *"Ladezustand"* der Batterie gibt die Menge an elektrischer Energie an, die in der Batterie gespeichert ist. D.h. der Ladezustand ist ein Maß für die elektrische Energie, die die Batterie bereitstellen kann.

Ferner ist die Steuereinheit vorzugsweise dazu eingerichtet, auf Basis des Batterietyps der Batterie die Ladeschaltung zur Erhaltung des Ladezustands der Batterie zu steuern, wenn die Batterie vollständig geladen ist.

Des Weiteren ist die Steuereinheit vorzugsweise dazu eingerichtet, auf Basis des Batterietyps der Batterie die Betriebsart der Ladeschaltung zur Erhaltung des Ladezustands der Batterie zu bestimmen.

Vorzugsweise ist die Steuereinheit dazu eingerichtet, die Ladeschaltung zur Erhaltung des Ladezustands der Batterie derart zu steuern, dass die Ladeschaltung die Batterie mit einem konstanten Strom versorgt, der kleiner als der konstante Strom zum Laden der Batterie ist, wenn der durch die Steuereinheit bestimmte Batterietyp der Batterie einer Nickel-Cadmium-Batterie entspricht; und die Ladeschaltung die Batterie mit Pulsen eines konstanten Stroms versorgt, wenn der durch die Steuereinheit bestimmte Batterietyp der Batterie einer Nickel-Metallhydrid-Batterie entspricht. Lithium Batterien werden in der Regel mit dem oben beschriebenen CC/CV Verfahren geladen. D.h., bis ca. 70 - 80% wird mit einem konstanten Strom geladen und danach mit einer konstanten Spannung. Nachdem der Akku vollgeladen ist, bleibt die Ladespannung konstant, kann aber in Abhängigkeit von der Akku-Technologie auch abgeschaltet werden. Die Regelung erfolgt aber bei hohem Ladezustand immer auf die Spannung.

Bei Nickel basierenden Batterien wird immer ein auf den Strom geregelt.

Eine Erhaltung des Ladezustands mittels einer Versorgung der Batterie mit Pulsen eines konstanten Stroms wird auch als Pulsladeverfahren bezeichnet.

Die vorstehend genannten optionalen Merkmale können gemäß der vorliegenden Erfindung beliebig kombiniert werden, um das erfindungsgemäße Verfahren zu ergeben.

Ferner wird gemäß der vorliegenden Erfindung ein Beleuchtungsgerät bereitgestellt, wobei das Beleuchtungsgerät ein, wie vorstehend beschriebenes, erfindungsgemäßes Notlichtbetriebsgerät und eine Leuchtmittelstrecke aufweisend wenigstens ein Leuchtmittel, vorzugsweise eine Leuchtdiodenstrecke aufweisend wenigstens eine Leuchtdiode, umfasst und das Notlichtbetriebsgerät dazu eingerichtet ist, die Leuchtmittelstrecke zu betreiben.

Des Weiteren wird gemäß der vorliegenden Erfindung ein Verfahren zum Betreiben eines, wie vorstehend beschriebenes, erfindungsgemäßes Notlichtbetriebsgerätes bereitgestellt, wobei das Notlichtbetriebsgerät zum Betreiben einer Leuchtmittelstrecke mit wenigstens einem Leuchtmittel, vorzugsweise einer Leuchtdiodenstrecke mit wenigstens einer Leuchtdiode, eingerichtet ist und einen Versorgungspfad zum Bereitstellen einer elektrischen Energie für die Leuchtmittelstrecke, einen Batterieanschluss zum elektrischen Anschließen einer Batterie an den Versorgungspfad des Notlichtbetriebsgerätes und eine Steuereinheit umfasst, wobei gemäß dem erfindungsgemäßen Verfahren die Steuereinheit wenigstens einen elektrischen Parameter der Batterie erfasst und auf Basis des wenigstens einen elektrischen Parameters der Batterie den Batterietyp der Batterie vorzugsweise automatisch bestimmt, wenn die Batterie durch den Batterieanschluss an den Versorgungspfad des Notlichtbetriebsgerätes elektrisch angeschlossen ist.

### 4. Beschreibung bevorzugter Ausführungsformen

Nachfolgend wird eine detaillierte Beschreibung der Figuren gegeben. Darin zeigt:
- **Figur** 1: schematisch eine bevorzugte Ausführungsform eines erfindungsgemäßen Beleuchtungsgerätes mit einer bevorzugten Ausführungsform eines erfindungsgemäßen Notlichtbetriebsgerätes,
- **Figur 2**: schematisch eine bevorzugte Ausführungsform eines erfindungsgemäßen Verfahrens zum Betreiben eines erfindungsgemäßen Notlichtbetriebsgerätes, insbesondere zum Bestimmen des Batterietyps einer an das erfindungsgemäße Notlichtbetriebsgerät elektrisch angeschlossenen Batterie sowie zum Laden der Batterie abhängig von dem ermittelten Batterietyp, und
- **Figur 3**: schematisch eine bevorzugte Ausführungsform der Bestimmung des Batterietyps gemäß dem erfindungsgemäßen Verfahren zum Betreiben eines erfindungsgemäßen Notlichtbetriebsgerätes.

In den Figuren weisen sich entsprechende Komponenten dieselben Bezugszeichen auf.

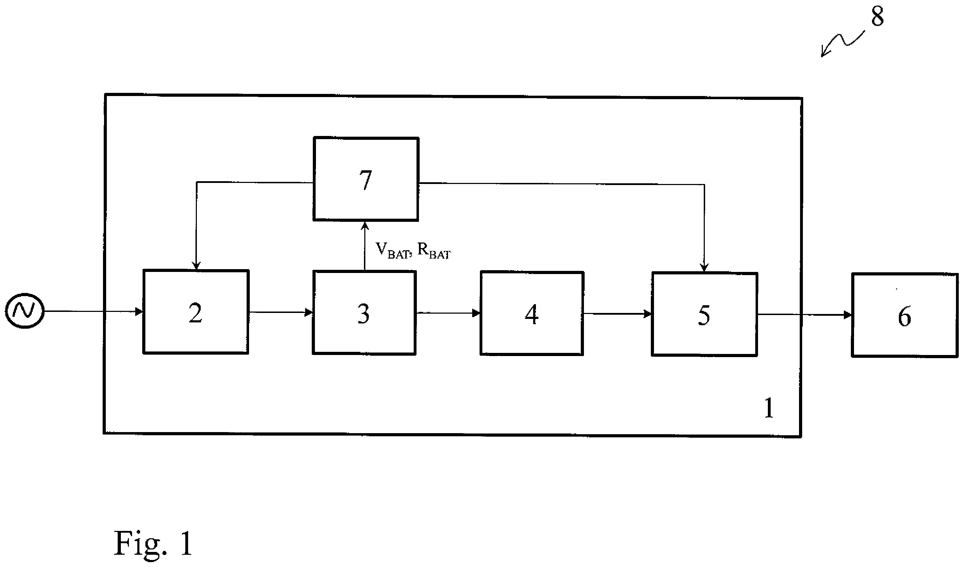

Die **Figur 1** zeigt schematisch eine bevorzugte Ausführungsform eines erfindungsgemäßen Beleuchtungsgerätes mit einer bevorzugten Ausführungsform eines erfindungsgemäßen Notlichtbetriebsgerätes.

Das erfindungsgemäße Notlichtbetriebsgerät 1 bildet zusammen mit der Leuchtmittelstrecke 6 aufweisend wenigstens ein Leuchtmittel (nicht gezeigt) ein Beleuchtungsgerät 8.

Das erfindungsgemäße Notlichtbetriebsgerät 1 umfasst einen Batterieanschluss 4 für eine Batterie, einen Versorgungspfad 5 und eine Steuereinheit 7. Durch den Batterieanschluss 4 kann eine Batterie 3 an den Versorgungspfad 5 elektrisch angeschlossen werden, sodass der Versorgungspfad 5 die Leuchtmittelstrecke 6 ausgehend von der an dem Batterieanschluss 4 angeschlossenen Batterie 3 mit elektrischer Energie versorgen kann. Der Batterieanschluss 4 kann auch Bestandteil des Versorgungspfads 5 sein (nicht gezeigt).

Vorzugsweise ist die Steuereinheit 7 dazu eingerichtet, den Versorgungspfad 5, insbesondere wenigstens eine Konverterstufe, die der Versorgungspfad vorzugsweise umfasst, zu steuern, um die der Leuchtmittelstrecke 6 zugeführte elektrische Energie zu steuern bzw. einzustellen und folglich den Betrieb der Leuchtmittelstrecke 6, insbesondere die Lichtemission durch die Leuchtmittelstrecke 6, zu steuern.

In Figur 1 ist der Fall gezeigt, in dem die Batterie 3 an den Batterieanschluss 4 elektrisch angeschlossen ist.

Die Steuereinheit 7 ist vorzugsweise ferner dazu eingerichtet, die Leerlaufspannung bzw. Batteriespannung V_{BAT} und den Innenwiderstand R_{BAT} der Batterie 3 als elektrische Parameter der Batterie 3 zu erfassen. Die Steuereinheit kann vorzugsweise noch weitere elektrische Parameter der Batterie 3 erfassen. Vorzugsweise umfasst das Notlichtbetriebsgerät 1, besonders vorzugsweise die Steuereinheit 7, eine Einrichtung zum Erfassen wenigstens eines elektrischen Parameters der an den Batterieanschluss 4 angeschlossenen Batterie 3.

Die Steuereinheit 7 ist dazu eingerichtet, gemäß den vorstehenden Ausführungen wenigstens einen elektrischen Parameter der Batterie 3 zu erfassen und auf Basis dieses wenigstens einen elektrischen Parameters der Batterie 3 den Batterietypen der Batterie 3 zu bestimmen.

Das Notlichtbetriebsgerät 1 umfasst vorzugsweise ferner eine Ladeschaltung 2, die dazu eingerichtet ist, die an den Batterieanschluss 4 des Notlichtbetriebsgerätes 1 angeschlossene Batterie 3 vorzugsweise im Normalbetrieb zu laden. Wie in Figur 1 angedeutet wird die Batterie 3 durch die Ladeschaltung 2 vorzugsweise mit einer Netzspannung geladen. Die Ladeschaltung 2 ist derart ausgestaltet, dass sie die Batterie 3 ausgehend von einer vorzugsweise regulären Energieversorgung, wie z.B. dem Stromnetz, laden kann. Vorzugsweise umfasst die Ladeschaltung wenigstens eine Konverterstufe zum Laden bzw. Aufladen der Batterie 3 mit einer elektrischen Energie vorzugsweise ausgehend von einer regulären Energieversorgung.

Die Steuereinheit 7 ist vorzugsweise dazu eingerichtet, die Ladeschaltung 2 zum Laden der Batterie 3 gemäß den vorstehenden Ausführungen zu steuern. Ferner ist die Steuereinheit 7 vorzugsweise dazu eingerichtet, die Ladeschaltung zum Aufrechterhalten bzw. zum Erhalten des Ladezustands gemäß den vorstehenden Ausführungen zu steuern, falls der Ladezustand der Batterie 3 einen maximalen bzw. vollständig geladenen Ladezustand darstellt.

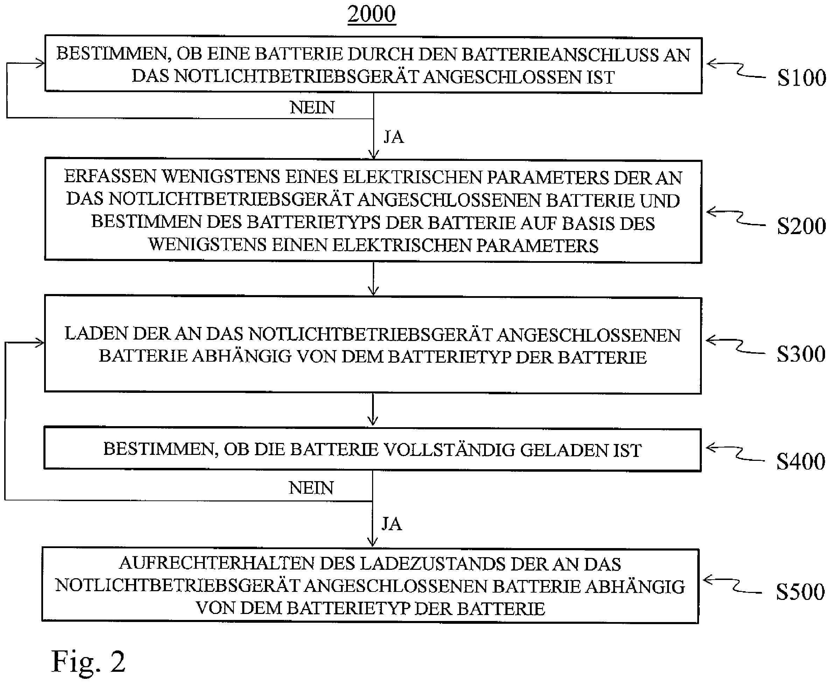

Die **Figur 2** zeigt schematisch eine bevorzugte Ausführungsform eines erfindungsgemäßen Verfahrens zum Betreiben eines erfindungsgemäßen Notlichtbetriebsgerätes, insbesondere zum Bestimmen des Batterietyps einer an das erfindungsgemäße Notlichtbetriebsgerät elektrisch angeschlossenen Batterie sowie zum Laden der Batterie abhängig von dem ermittelten Batterietyp.

In dem ersten Verfahrensschritt S100 des erfindungsgemäßen Verfahrens 2000 bestimmt das Notlichtbetriebsgerät 1, insbesondere die Steuereinheit 7, ob eine Batterie 3 an den Batterieanschluss 4 elektrisch angeschlossen ist bzw. ob eine Batterie durch den Batterieanschluss 4 an das Notlichtbetriebsgerät 1, insbesondere an den Versorgungspfad 5 des Notlichtbetriebsgerätes 1, elektrisch angeschlossen ist. Wenn dies der Fall ist (JA), dann wird der Verfahrensschritt S200 ausgeführt, andernfalls (NEIN) überwacht die Steuereinheit weiterhin, ob eine Batterie 3 an das Notlichtbetriebsgerät 1 angeschlossen wird.

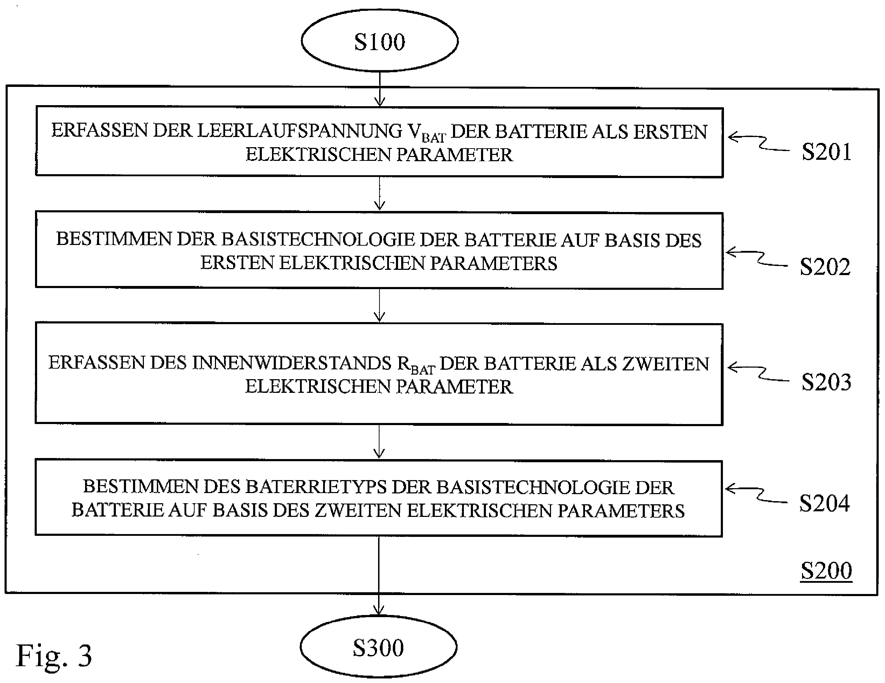

In dem zweiten Verfahrensschritt S200 erfasst die Steuereinheit 7 wenigstens einen elektrischen Parameter der an das Notlichtbetriebsgerät 1 angeschlossenen Batterie 3 und bestimmt auf Basis dieses wenigstens einen elektrischen Parameters den Batterietyp der Batterie 3. Eine bevorzugte Ausführungsform des Verfahrensschrittes S200 wird nachfolgend mit Bezug auf die Figur 3 beschrieben.

Auf den zweiten Verfahrensschritt S200 folgt der dritte Verfahrensschritt S300, in dem die Ladeschaltung 2 des Notlichtbetriebsgerätes 1 die an das Notlichtbetriebsgerät 1 angeschlossene Batterie 3 abhängig von dem im Verfahrensschritt S200 bestimmten Batterietyp der Batterie 3 ladet. Hierbei steuert die Steuereinheit 7 die Ladeschaltung 2 abhängig von dem im Verfahrensschritt S200 bestimmten Batterietyp der Batterie 3**.**

Auf den dritten Verfahrensschritt S300 folgt der vierte Verfahrensschritt S400, in dem die Steuereinheit 7 bestimmt, ob die Batterie 3 vollständig geladen ist oder nicht. Wenn die Batterie 3 vollständig geladen ist (JA), dann wird der Verfahrensschritt S500 durchgeführt. Wenn die Batterie 3 noch nicht vollständig geladen ist (NEIN), dann lädt die Ladeschaltung 2 die Batterie 3 weiter auf (S300).

Im fünften Verfahrensschritt S500 lädt die Ladeschaltung 2 die Batterie 3 derart abhängig von dem Batterietyp der Batterie 3, dass der vollständig geladene Ladezustand der Batterie aufrechterhalten wird. Hierbei steuert die Steuereinheit 7 die Ladeschaltung 2 abhängig von dem Batterietyp der Batterie 3 zum Aufrechterhalten des Ladezustands der Batterie 3**.**

Die **Figur 3** zeigt schematisch eine bevorzugte Ausführungsform der Bestimmung des Batterietyps gemäß dem erfindungsgemäßen Verfahren zum Betreiben eines erfindungsgemäßen Notlichtbetriebsgerätes.

Die Figur 3 zeigt insbesondere eine bevorzugte Ausführungsform des zweiten Verfahrensschrittes S200 des in Figur 2 gezeigten Verfahrens 2000.

Im ersten Verfahrensschritt S201 erfasst die Steuereinheit 7 die Leerlaufspannung bzw. Batteriespannung V_{BAT} der Batterie 3 als ersten elektrischen Parameter der Batterie 3**.**

Im auf den ersten Verfahrensschritt S201 folgenden zweiten Verfahrensschritt S202 bestimmt die Steuereinheit 7 dann die Basistechnologie der Batterie 3 auf Basis der Leerlaufspannung V_{BAT} (erster elektrischer Parameter) der Batterie 3**.**

Im auf den zweiten Verfahrensschritt S202 folgenden dritten Verfahrensschritt S203 erfasst die Steuereinheit 7 den Innenwiderstand R_{BAT} der Batterie 3 als zweiten elektrischen Parameter der Batterie 3**.**

Im auf den dritten Verfahrensschritt S203 folgenden vierten Verfahrensschritt S204 bestimmt die Steuereinheit 7 dann den Batterietyp der Basistechnologie der Batterie 3 auf Basis des Innenwiderstands R_{BAT} (zweiter elektrischer Parameter) der Batterie 3**.**

## Patentansprüche

1. Notlichtbetriebsgerät (1) zum Betreiben einer Leuchtmittelstrecke (6) mit wenigstens einem Leuchtmittel, vorzugsweise einer Leuchtdiodenstrecke mit wenigstens einer Leuchtdiode, mit
**a)** einem Versorgungspfad (5) zum Bereitstellen einer elektrischen Energie für die Leuchtmittelstrecke (6),
**b)** einem Batterieanschluss (4) zum elektrischen Anschließen einer Batterie (3) an den Versorgungspfad (5) des Notlichtbetriebsgerätes (1), und einer Ladeschaltung (2), die dazu eingerichtet ist, die Batterie zu laden, wenn die Batterie durch den Batterieanschluss an den Versorgungspfad des Notlichtbetriebsgerätes angeschlossen ist, und
**c)** einer Steuereinheit (7),
**d)** wobei die Steuereinheit (7) dazu eingerichtet ist, wenn die Batterie (3) durch den Batterieanschluss (4) an den Versorgungspfad (5) des Notlichtbetriebsgerätes (1) elektrisch angeschlossen ist, als einen ersten elektrischen Parameter der Batterie (3) die Leerlaufspannung, V_{BAT}, der Batterie zu erfassen und weiterhin dazu eingerichtet ist:
∘ zu bestimmen, dass eine Basistechnologie der Batterie (3) einer ersten Basistechnologie entspricht, wenn die Leerlaufspannung, V_{BAT}, der Batterie (3) kleiner als ein vorbestimmter Spannungsschwellenwert ist, und
zu bestimmen, dass die Basistechnologie der Batterie (3) einer zweiten Basistechnologie entspricht, wenn die Leerlaufspannung, V_{BAT}, der Batterie (3) größer als der vorbestimmte Spannungsschwellenwert ist,
wobei die Steuereinheit (7) dazu eingerichtet ist,
- einen zweiten elektrischen Parameter zu erfassen,
- auf Basis des zweiten elektrischen Parameters einen Batterietyp der Basistechnologie der Batterie (3) zu bestimmen,
- als zweiten elektrischen Parameter den Innenwiderstand (R_{BAT}) der Batterie (3) zu erfassen, und
- auf Basis des Innenwiderstands (R_{BAT}) den Batterietyp der Basistechnologie der Batterie (3) zu bestimmen, und
wobei das Notlichtbetriebsgerät ausgebildet ist, auf Basis des bestimmten Batterietyps die Batterie mit dem für den Batterietyp geeigneten Ladebetrieb zu laden.

2. Notlichtbetriebsgerät (1) zum Betreiben einer Leuchtmittelstrecke (6) mit wenigstens einem Leuchtmittel, vorzugsweise einer Leuchtdiodenstrecke mit wenigstens einer Leuchtdiode, mit
**a)** einem Versorgungspfad (5) zum Bereitstellen einer elektrischen Energie für die Leuchtmittelstrecke (6),
**b)** einem Batterieanschluss (4) zum elektrischen Anschließen einer Batterie (3) an den Versorgungspfad (5) des Notlichtbetriebsgerätes (1), und einer Ladeschaltung (2), die dazu eingerichtet ist, die Batterie zu laden, wenn die Batterie durch den Batterieanschluss an den Versorgungspfad des Notlichtbetriebsgerätes angeschlossen ist, und
**c)** einer Steuereinheit (7),
**d)** wobei die Steuereinheit (7) dazu eingerichtet ist, wenn die Batterie (3) durch den Batterieanschluss (4) an den Versorgungspfad (5) des Notlichtbetriebsgerätes (1) elektrisch angeschlossen ist, als einen ersten elektrischen Parameter der Batterie (3) die Leerlaufspannung, V_{BAT}, der Batterie zu erfassen und weiterhin dazu eingerichtet ist:
∘ zu bestimmen, dass eine Basistechnologie der Batterie (3) einer ersten Basistechnologie entspricht, wenn die Leerlaufspannung, V_{BAT}, der Batterie (3) kleiner oder gleich als ein erster vorbestimmter Spannungsschwellenwert ist, und
∘ zu bestimmen, dass die Basistechnologie der Batterie (3) einer zweiten Basistechnologie entspricht, wenn die Leerlaufspannung, V_{BAT}, der Batterie (3) größer oder gleich als ein zweiter vorbestimmter Spannungsschwellenwert ist,
wobei der zweite vorbestimmte Spannungsschwellenwert größer als der erste vorbestimmte Spannungsschwellenwert ist.
wobei die Steuereinheit (7) dazu eingerichtet ist, - einen zweiten elektrischen Parameter zu erfassen,
- auf Basis des zweiten elektrischen Parameters einen Batterietyp der Basistechnologie der Batterie (3) zu bestimmen,
- als zweiten elektrischen Parameter den Innenwiderstand (R BAT) der Batterie (3) zu erfassen, und
- auf Basis des Innenwiderstands (R BAT) den Batterietyp der Basistechnologie der Batterie (3) zu bestimmen, und
wobei das Notlichtbetriebsgerät (1) ausgebildet ist, auf Basis des bestimmten Batterietyps die Batterie (3) mit dem für den Batterietyp geeigneten Ladebetrieb zu laden.

3. Notlichtbetriebsgerät (1) gemäß Anspruch 1 or 2, wobei die Steuereinheit (7) dazu eingerichtet ist, die Basistechnologie der Batterie (3)
zu bestimmen, sobald die Batterie (3) durch den Batterieanschluss (4) an den Versorgungspfad (5) des Notlichtbetriebsgerätes (1) elektrisch angeschlossen ist.

4. Notlichtbetriebsgerät (1) gemäß einem der Ansprüche 1 bis 3,
- wobei die Steuereinheit (7) dazu eingerichtet ist, auf Basis des Innenwiderstands (R_{BAT}) der Batterie (3) zu bestimmen, ob der Batterietyp der Basistechnologie der Batterie (3) einem ersten Batterietyp oder einem zweiten Batterietyp entspricht.

5. Notlichtbetriebsgerät (1) gemäß Anspruch 4,
wobei die Steuereinheit (7) dazu eingerichtet ist,
- zu bestimmen, dass der Batterietyp der Basistechnologie der Batterie (3) dem ersten Batterietyp entspricht, wenn der erfasste Innenwiderstand (R_{BAT}) kleiner als ein vorbestimmter Widerstandsschwellenwert ist, und
- zu bestimmen, dass der Batterietyp der Batterie dem zweiten Batterietyp entspricht, wenn der erfasste Innenwiderstand (R_{BAT}) größer als der vorbestimmte Widerstandsschwellenwert ist.

6. Notlichtbetriebsgerät (1) gemäß einem der Ansprüche 1 bis 5,
- wobei das Notlichtbetriebsgerät (1) eine Ladeschaltung (2) aufweist, die dazu eingerichtet ist die Batterie (3) zu laden, wenn die Batterie (3) durch den Batterieanschluss (4) an den Versorgungspfad (5) des Notlichtbetriebsgerätes (1) angeschlossen ist, und
- wobei die Steuereinheit (7) dazu eingerichtet ist, die Ladeschaltung (2) zum Laden der Batterie (3) auf Basis des Batterietyps der Batterie (3) zu steuern.

7. Notlichtbetriebsgerät (1) gemäß Anspruch 6,
- wobei die Steuereinheit (7) dazu eingerichtet ist, auf Basis des Batterietyps der Batterie (3) die Betriebsart der Ladeschaltung (2) zum Laden der Batterie (3) zu bestimmen.

8. Notlichtbetriebsgerät (1) gemäß Anspruch 6 oder 7,
- wobei die Steuereinheit (7) dazu eingerichtet ist, die Ladeschaltung (2) zum Laden der Batterie (3) derart zu steuern, dass
- die Ladeschaltung (2) die Batterie (3) mit einem konstanten Strom lädt, wenn die durch die Steuereinheit (7) bestimmte Basistechnologie der Batterie (3) eine auf Nickel basierte Batterie darstellt; und
- die Ladeschaltung (2) die Batterie (3) zuerst mit einem konstanten Strom bis zu einem vorbestimmten Ladezustand der Batterie (3) und nach Erreichen des vorbestimmten Ladezustands die Batterie (3) mit einer konstanten Spannung lädt, wenn die durch die Steuereinheit (7) bestimmte Basistechnologie der Batterie (3) eine auf Lithium basierte Batterie darstellt.

9. Notlichtbetriebsgerät (1) gemäß einem der Ansprüche 4 bis 7,
- wobei die Steuereinheit (7) dazu eingerichtet ist, die Ladeschaltung (2) zur Erhaltung des Ladezustands der Batterie (3) derart zu steuern, dass
- die Ladeschaltung (2) die Batterie (3) mit einem konstanten Strom versorgt, der kleiner als der konstante Strom zum Laden der Batterie (3) ist, wenn der durch die Steuereinheit (7) bestimmte Batterietyp der Batterie (3) einer Nickel-Cadmium-Batterie entspricht; und
- die Ladeschaltung (2) die Batterie (3) mit Pulsen eines konstanten Stroms versorgt, wenn der durch die Steuereinheit (7) bestimmte Batterietyp der Batterie (3) einer Nickel-Metallhydrid-Batterie entspricht.

10. Beleuchtungsgerät (8) mit
- einem Notlichtbetriebsgerät (1) gemäß einem der vorhergehenden Ansprüche, und
- einer Leuchtmittelstrecke (6) aufweisend wenigstens ein Leuchtmittel, vorzugsweise einer Leuchtdiodenstrecke aufweisend wenigstens eine Leuchtdiode,
- wobei das Notlichtbetriebsgerät (1) dazu eingerichtet ist, die Leuchtmittelstrecke (6) zu betreiben.

## Claims

1. Emergency lighting device (1) for operating an illuminant strip (6) having at least one illuminant, preferably a light-emitting diode strip with at least one light-emitting diode, comprising
a) a supply path (5) for providing electrical energy for the illuminant strip (6),
b) a battery terminal (4) for electrically connecting a battery (3) to the supply path (5) of the emergency lighting device (1), and a charging circuit (2) configured to charge the battery if the battery is connected by means of the battery terminal to the supply path of the emergency lighting device, and
c) a control unit (7),
d) wherein the control unit (7), if the battery (3) is electrically connected by means of the battery terminal (4) to the supply path (5) of the emergency lighting device (1), is configured to detect the open circuit voltage, V_{BAT}, of the battery as a first electrical parameter of the battery (3), and is furthermore configured:
∘ to determine that a basic technology of the battery (3) corresponds to a first basic technology if the open circuit voltage, V_{BAT}, of the battery (3) is less than a predetermined voltage threshold value, and
to determine that the basic technology of the battery (3) corresponds to a second basic technology if the open circuit voltage, V_{BAT}, of the battery (3) is greater than the predetermined voltage threshold value.
- wherein the control unit (7) is configured
- to detect a second electrical parameter,
- to determine a battery type of the basic technology of the battery (3) on the basis of the second electrical parameter,
- to detect the internal resistance (R_{BAT}) of the battery (3) as a second electrical parameter, and
- to determine the battery type of the basic technology of the battery (3) on the basis of the internal resistance (R_{BAT}), and
wherein the emergency lighting device is designed to charge the battery, on the basis of the determined battery type, with the charging operation suitable for the battery type.

2. Emergency lighting device (1) for operating an illuminant strip (6) having at least one illuminant, preferably a light-emitting diode strip with at least one light-emitting diode, comprising
a) a supply path (5) for providing electrical energy for the illuminant strip (6),
b) a battery terminal (4) for electrically connecting a battery (3) to the supply path (5) of the emergency lighting device (1), and a charging circuit (2) configured to charge the battery if the battery is connected by means of the battery terminal to the supply path of the emergency lighting device, and
c) a control unit (7),
d) wherein the control unit (7), if the battery (3) is electrically connected by means of the battery terminal (4) to the supply path (5) of the emergency lighting device (1), is configured to detect the open circuit voltage, V_{BAT}, of the battery as a first electrical parameter of the battery (3), and is furthermore configured:
∘ to determine that a basic technology of the battery (3) corresponds to a first basic technology if the open circuit voltage, V_{BAT}, of the battery (3) is less than or equal to a first predetermined voltage threshold value, and
∘ to determine that the basic technology of the battery (3) corresponds to a second basic technology if the open circuit voltage, V_{BAT}, of the battery (3) is greater than or equal to a second predetermined voltage threshold value,
wherein the second predetermined voltage threshold value is greater than the first predetermined voltage threshold value.
- wherein the control unit (7) is configured
- to detect a second electrical parameter,
- to determine a battery type of the basic technology of the battery (3) on the basis of the second electrical parameter,
- to detect the internal resistance (R BAT) of the battery (3) as a second electrical parameter, and
- to determine the battery type of the basic technology of the battery (3) on the basis of the internal resistance (R BAT), and
wherein the emergency lighting device (1) is designed to charge the battery (3), on the basis of the determined battery type, with the charging operation suitable for the type of battery.

3. Emergency lighting device (1) according to claim 1 or 2, wherein the control unit (7) is configured to determine the basic technology of the battery (3) as soon as the battery (3) is electrically connected by means of the battery terminal (4) to the supply path (5) of the emergency lighting device (1).

4. Emergency lighting device (1) according to one of claims 1 through 3,
- wherein the control unit (7) is configured to determine, on the basis of the internal resistance (R_{BAT}) of the battery (3), whether the battery type of the basic technology of the battery (3) corresponds to a first battery type or to a second battery type.

5. Emergency lighting device (1) according to claim 4,
- wherein the control unit (7) is configured
- to determine that the battery type of the basic technology of the battery (3) corresponds to the first battery type if the detected internal resistance (R_{BAT}) is less than a predetermined resistance threshold value, and
- to determine that the battery type of the battery corresponds to the second battery type if the detected internal resistance (R_{BAT}) is greater than the predetermined resistance threshold value.

6. Emergency lighting device (1) according to one of claims 1 through 5,
- wherein the emergency lighting device (1) has a charging circuit (2) which is configured to charge the battery (3) if the battery (3) is connected by means of the battery terminal (4) to the supply path (5) of the emergency lighting device (1), and
- wherein the control unit (7) is configured to control the charging circuit (2) for charging the battery (3) on the basis of the battery type of the battery (3).

7. Emergency lighting device (1) according to claim 6,
- wherein the control unit (7) is configured to determine, on the basis of the battery type of the battery (3), the operating mode of the charging circuit (2) for charging the battery (3).

8. Emergency lighting device (1) according to claim 6 or 7,
- wherein the control unit (7) is configured to control the charging circuit (2) for charging the battery (3), in such a way that
- the charging circuit (2) charges the battery (3) with a constant current if the basic technology of the battery (3) as determined by the control unit (7) constitutes a nickel-based battery; and
- the charging circuit (2) first charges the battery (3) with a constant current up to a predetermined charge state of the battery (3) and, after reaching the predetermined charge state, charges the battery (3) with a constant voltage if the basic technology of the battery (3) determined by the control unit (7) constitutes a lithium-based battery.

9. Emergency lighting device (1) according to one of claims 4 through 7,
- wherein the control unit (7) is configured to control the charging circuit (2) in order to maintain the charge state of the battery (3), in such a way that
- the charging circuit (2) supplies the battery (3) with a constant current which is less than the constant current for charging the battery (3) if the battery type of the battery (3) as determined by the control unit (7) corresponds to a nickel-cadmium battery; and
- the charging circuit (2) supplies the battery (3) with pulses of a constant current if the battery type of the battery (3) as determined by the control unit (7) corresponds to a nickel-metal hydride battery.

10. Illumination device (8), with
- an emergency lighting device (1) according to one of the preceding claims, and
- an illuminant strip (6) having at least one illuminant, preferably a light-emitting diode strip having at least one light-emitting diode,
- wherein the emergency lighting device (1) is configured to operate the illuminant strip (6).

## Revendications

1. Appareil d'éclairage de secours (1) destiné à faire fonctionner un tronçon de moyens d'éclairage (6) doté d'au moins un moyen d'éclairage, de préférence un tronçon de diodes électroluminescentes doté d'au moins une diode électroluminescente, comprenant
a) un chemin d'alimentation (5) destiné à fournir une énergie électrique pour le tronçon de moyens d'éclairage (6),
b) un raccordement de batterie (4) pour le raccordement électrique d'une batterie (3) au chemin d'alimentation (5) de l'appareil d'éclairage de secours (1), et un circuit de charge (2), qui est configuré pour charger la batterie quand la batterie est raccordée au chemin d'alimentation de l'appareil d'éclairage de secours par le raccordement de batterie, et
c) une unité de commande (7),
d) l'unité de commande (7) étant configurée pour détecter, lorsque la batterie (3) est raccordée électriquement au chemin d'alimentation (5) de l'appareil d'éclairage de secours (1) par le raccordement de batterie (4), comme premier paramètre électrique de la batterie (3), la tension à vide, V_{BAT}, de la batterie et étant en outre configurée pour :
∘ déterminer qu'une technologie de base de la batterie (3) correspond à une première technologie de base lorsque la tension à vide, V_{BAT}, de la batterie (3) est inférieure à une valeur seuil de tension prédéfinie, et
déterminer que la technologie de base de la batterie (3) correspond à une seconde technologie de base lorsque la tension à vide, V_{BAT}, de la batterie (3) est supérieure à la valeur seuil de tension prédéfinie.
l'unité de commande (7) étant configurée pour
- détecter un second paramètre électrique,
- sur la base du second paramètre électrique, déterminer un type de batterie de la technologie de base de la batterie (3),
- détecter la résistance interne (R_{BAT}) de la batterie (3) comme second paramètre électrique, et
- sur la base de la résistance interne (R_{BAT}), déterminer le type de batterie de la technologie de base de la batterie (3), et
l'appareil d'éclairage de secours étant conçu pour, sur la base du type de batterie déterminé, charger la batterie avec le régime de charge adapté au type de batterie.

2. Appareil d'éclairage de secours (1) destiné à faire fonctionner un tronçon de moyens d'éclairage (6) doté d'au moins un moyen d'éclairage, de préférence un tronçon de diodes électroluminescentes doté d'au moins une diode électroluminescente, comprenant
a) un chemin d'alimentation (5) destiné à fournir une énergie électrique pour le tronçon de moyens d'éclairage (6),
b) un raccordement de batterie (4) pour le raccordement électrique d'une batterie (3) au chemin d'alimentation (5) de l'appareil d'éclairage de secours (1), et un circuit de charge (2), qui est configuré pour charger la batterie quand la batterie est raccordée au chemin d'alimentation de l'appareil d'éclairage de secours par le raccordement de batterie, et
c) une unité de commande (7),
d) l'unité de commande (7) étant configurée pour détecter, lorsque la batterie (3) est raccordée électriquement au chemin d'alimentation (5) de l'appareil d'éclairage de secours (1) par le raccordement de batterie (4), comme premier paramètre électrique de la batterie (3), la tension à vide, V_{BAT}, de la batterie et étant en outre configurée pour :
∘ déterminer qu'une technologie de base de la batterie (3) correspond à une première technologie de base lorsque la tension à vide, V_{BAT}, de la batterie (3) est inférieure ou égale à une première valeur seuil de tension prédéfinie, et
∘ déterminer que la technologie de base de la batterie (3) correspond à une seconde technologie de base lorsque la tension à vide, V_{BAT}, de la batterie (3) est supérieure ou égale à une seconde valeur seuil de tension prédéfinie,
la seconde valeur seuil de tension prédéfinie étant supérieure à la première valeur seuil de tension prédéfinie.
l'unité de commande (7) étant configurée pour
- détecter un second paramètre électrique,
- sur la base du second paramètre électrique, déterminer un type de batterie de la technologie de base de la batterie (3),
- détecter la résistance interne (R BAT) de la batterie (3) comme second paramètre électrique, et
- sur la base de la résistance interne (R BAT), déterminer le type de batterie de la technologie de base de la batterie (3), et
l'appareil d'éclairage de secours (1) étant conçu pour charger, sur la base du type de batterie déterminé, la batterie (3) avec le régime de charge adapté au type de batterie.

3. Appareil d'éclairage de secours (1) selon la revendication 1 ou 2,
dans lequel l'unité de commande (7) est configurée pour déterminer la technologie de base de la batterie (3) dès que la batterie (3) est raccordée électriquement au chemin d'alimentation (5) de l'appareil d'éclairage de secours (1) par le raccordement de batterie (4).

4. Appareil d'éclairage de secours (1) selon l'une quelconque des revendications 1 à 3,
- dans lequel l'unité de commande (7) est configurée pour déterminer, sur la base de la résistance interne (R_{BAT}) de la batterie (3), si le type de batterie de la technologie de base de la batterie (3) correspond à un premier type de batterie ou à un second type de batterie.

5. Appareil d'éclairage de secours (1) selon la revendication 4,
l'unité de commande (7) étant configurée pour
- déterminer que le type de batterie de la technologie de base de la batterie (3) correspond au premier type de batterie lorsque la résistance interne (R_{BAT}) détectée est inférieure à une valeur seuil de résistance prédéfinie, et
- déterminer que le type de batterie de la batterie correspond au second type de batterie lorsque la résistance interne (R_{BAT}) détectée est supérieure à la valeur seuil de résistance prédéfinie.

6. Appareil d'éclairage de secours (1) selon l'une quelconque des revendications 1 à 5,
- dans lequel l'appareil d'éclairage de secours (1) comporte un circuit de charge (2), qui est configuré pour charger la batterie (3) lorsque la batterie (3) est raccordée au chemin d'alimentation (5) de l'appareil d'éclairage de secours (1) par le raccordement de batterie (4), et
- dans lequel l'unité de commande (7) est configurée pour commander le circuit de charge (2) pour la charge de la batterie (3) sur la base du type de batterie de la batterie (3).

7. Appareil d'éclairage de secours (1) selon la revendication 6,
- dans lequel l'unité de commande (7) est configurée pour déterminer, sur la base du type de batterie de la batterie (3), le mode de fonctionnement du circuit de charge (2) pour charger la batterie (3).

8. Appareil d'éclairage de secours (1) selon la revendication 6 ou 7,
- dans lequel l'unité de commande (7) est configurée pour commander le circuit de charge (2) pour la charge de la batterie (3) de telle manière que
- le circuit de charge (2) charge la batterie (3) avec un courant constant lorsque la technologie de base de la batterie (3) déterminée par l'unité de commande (7) indique une batterie à base de nickel ; et
- le circuit de charge (2) charge d'abord la batterie (3) avec un courant constant jusqu'à un état de charge prédéfini de la batterie (3) et, une fois l'état de charge prédéfini atteint, charge la batterie (3) avec une tension continue lorsque la technologie de base de la batterie (3) déterminée par l'unité de commande (7) indique une batterie à base de lithium.

9. Appareil d'éclairage de secours (1) selon l'une quelconque des revendications 4 à 7,
- dans lequel l'unité de commande (7) est configurée pour commander le circuit de charge (2) pour maintenir l'état de charge la batterie (3) de telle manière que
- le circuit de charge (2) alimente la batterie (3) avec un courant constant, qui est inférieur au courant constant pour charger la batterie (3), lorsque le type de batterie de la batterie (3) déterminé par l'unité de commande (7) correspond à une batterie au nickel-cadmium ; et
- le circuit de charge (2) alimente la batterie (3) avec des impulsions de courant constant, lorsque le type de batterie de la batterie (3) déterminé par l'unité de commande (7) correspond à une batterie au nickel-hydrure métallique.

10. Appareil d'éclairage (8) comprenant
- un appareil d'éclairage de secours (1) selon l'une quelconque des revendications précédentes et
- un tronçon de moyens d'éclairage (6) comportant au moins un moyen d'éclairage, de préférence un tronçon de diodes électroluminescentes comportant au moins une diode électroluminescente
- l'appareil d'éclairage de secours (1) étant configuré pour faire fonctionner le tronçon de moyens d'éclairage (6).
